# EUROPEAN PATENT APPLICATION

(11) **EP 2 237 216 A1**
(43) Date of publication of application: **06.10.2010**
(21) Application number: 09704898.7
(22) Date of filing: 23.01.2009
(51) Int. Cl.: G06Q 50/00, B60L 11/18, H01M 10/44, H02J 7/00

(54) **ELECTRIC DRIVE APPARATUS CHARGING SYSTEM AND METHOD**

(30) Priority: 25.01.2008 JP 2008015375
(71) Applicant: Kyushu Electric Power Co., Inc., Fukuoka 810-8720 (JP)
(72) Inventor: MIZUMACHI, Yutaka, Fukuoka-shi Fukuoka 810-8720 (JP)
(74) Representative: Curley, Donnacha John
(86) International application number: PCT/JP2009/051110
(87) International publication number: WO 2009/093705

(57) **Abstract**

The degrees of exhaust emission suppression and contribution to the environment are evaluated, and a point is added according to the degree of contribution. A system is configured by including an electric vehicle (100), an electric power company (110), a management center (120), a network (130) that connects these, and the like. A battery of the electric vehicle (100) is charged with electric power supplied mainly by the electric power company (110), and various kinds of charge-related information are transmitted to and received from the management center (120) or the like via the network (130) or the like. At the time of charging, the electric vehicle (100) uses wireless communications, for example, to transmit and receive various kinds of data to and from a server (121) via a radio base station (131) and the network (130).

## Description

### TECHNICAL FIELD

The present invention relates to electrically-driven apparatus charging system and method, and more particularly to electrically-driven apparatus charging system and method which are capable of replenishing electric power required for running, in ordinary households or outdoor charging facilities.

### BACKGROUND ART

Recently, various types of drive systems such as a hybrid and a fuel cell have been developed and come into practical use even in the field of automobiles where those having mounted therein an engine driven by fossil fuel such as gasoline have heretofore been the mainstream, from the viewpoints of energy saving and environmental protection. Of such automotive drive systems, an electric vehicle runs by charging the vehicle-mounted secondary battery to which electric power is supplied as a power supply from a household power supply provided mainly by an electric power company or the like, or from a charging facility such as a charging station installed by the roadside, in a parking lot, or the like. The electric vehicle is low in fuel consumption per unit power and hence is one of those which are lowest also in emissions of CO₂ and the like, because the electric power is supplied mainly from a power plant capable of highly efficient electric power generation. Such an electric vehicle needs more effective charging, and there have been proposed various charging methods. (See Japanese Patent Laid-Open No. 2007-116799, for example.) Such an electric vehicle is more efficient in terms of fuel consumption and also lower in exhaust emissions than a conventional gasoline-driven car or the like. However, the electric vehicle itself is expensive, and there is a problem that this prevents further spread to the general public.

The present invention has been made in consideration for the foregoing problem. An object of the present invention is to provide electrically-driven apparatus charging system and method which are capable of evaluating the degrees of exhaust emission suppression and contribution to the environment for example in comparison with a gasoline-driven car, and giving an incentive to the owner of the electric vehicle by adding a point according to the degree of contribution, thereby promoting the widespread use thereof.
Patent Document 1: Japanese Patent Laid-Open No. 2007-116799

### DISCLOSURE OF THE INVENTION

In order to attain the above object, the invention according to claim 1 is an electrically-driven apparatus charging system for charging a driven apparatus driven by electric power supplied by power supply means, characterized by comprising: charging amount detection means for detecting the charging amount to the power supply means, when the power supply means is charged; driving amount calculation means for calculating a driving amount of the electrically-driven apparatus after the last charging, the driving amount calculation means being provided in a chassis of the electrically-driven apparatus; and a management terminal that acquires an amount of exhaust emission reduction, by calculating a reference amount of non-electrical exhaust emissions based on a preset amount of exhaust emissions from a non-electrically driven apparatus per unit driving amount and the driving amount calculated by the driving amount calculation means, and by calculating an actual amount of exhaust emissions required to generate electric power to be used for the charging based on a preset amount of exhaust emissions to be emitted to generate a per-unit amount of electric power for the charging and the charging amount detected by the charging amount detection means.

The invention according to claim 2 is the electrically-driven apparatus charging system of claim 1, characterized by further comprising: power supply information transmission means for transmitting power supply means identification information for identifying the power supply means, the power supply information transmission means being connected to the power supply means; and chassis information transmission means for transmitting chassis identification information for identifying the chassis, the chassis information transmission means being provided in the chassis of the electrically-driven apparatus, **characterized in that** the management terminal includes charge management means for receiving the transmitted power supply means identification information and the transmitted chassis identification information, and inputted user identification information, for comparing the received identification information with prestored identification information, and for permitting charging the power supply means if there is a match.

The invention according to claim 3 is the electrically-driven apparatus charging system of any one of claims 1 and 2, **characterized in that** the management terminal further includes reference information acquisition means for downloading, from a management center server, the preset amount of exhaust emissions from the non-electrically driven apparatus per unit driving amount and the preset amount of exhaust emissions to be emitted to generate the per-unit amount of electric power for the charging.

The invention according to claim 4 is the electrically-driven apparatus charging system of claim 3, **characterized in that** the reference information acquisition means receives, from the management center server via a wireless network, the preset amount of exhaust emissions from the non-electrically driven apparatus per unit driving amount and the preset amount of exhaust emissions to be emitted to generate the per-unit amount of electric power for the charging.

The invention according to claim 5 is the electrically-driven apparatus charging system of any one of claims 1 to 4, **characterized in that** that the management terminal includes Eco-point calculation means for calculating an Eco-point from the amount of exhaust emission reduction acquired by the amount-of-reduction acquisition means.

The invention according to claim 6 is the electrically-driven apparatus charging system of claim 5, **characterized in that** the management terminal downloads an Eco-point coefficient for calculation of the Eco-point from the management center server.

The invention according to claim 7 is the electrically-driven apparatus charging system of claim 6, **characterized in that** the management terminal receives the Eco-point coefficient for calculation of the Eco-point from the management center server via the wireless network.

The invention according to claim 8 is the electrically-driven apparatus charging system of any one of claims 5 to 7, **characterized in that** the management terminal further comprises Eco-point transmission means for transmitting the calculated Eco-point to the management center server, and the management center server includes Eco-point management means for storing the transmitted Eco-point and managing the use and accumulation of the Eco-point.

The invention according to claim 8 is an electrically-driven apparatus charging method for charging an electrically-driven apparatus driven by electric power supplied by a power supply means, characterized by comprising: an charging amount detecting step of detecting the charging amount to the power supply means when the power supply means is charged; a driving amount calculating step of calculating the driving amount of the electrically-driven apparatus after the last charging, the driving amount calculating step being provided in a chassis of the electrically-driven apparatus; and an amount-of-reduction calculating step of acquiring an amount of exhaust emission reduction, by calculating a reference amount of non-electrical exhaust emissions based on a preset amount of exhaust emissions from a non-electrically driven apparatus per unit driving amount and the driving amount calculated by the driving amount calculating step, and by calculating an actual amount of exhaust emissions required to generate electric power to be used for the charging based on a preset amount of exhaust emissions to be emitted to generate a per-unit amount of electric power for the charging and the charging amount detected by the charging amount detecting step.

As described above, the system or method according to the present invention includes a management terminal that acquires an amount of exhaust emission reduction, by calculating a reference amount of non-electrical exhaust emissions based on a preset amount of exhaust emissions from a non-electrically driven apparatus per unit driving amount and the driving amount calculated by the driving amount calculation means, and by calculating an actual amount of exhaust emissions required to generate electric power to be used for the charging based on a preset amount of exhaust emissions to be emitted to generate a per-unit amount of electric power for the charging and the charging amount detected by the charging amount detection means. This enables evaluating the degrees of exhaust emission suppression and contribution to the environment for example by comparison with a gasoline-driven car, and giving an incentive to the owner of the electric vehicle by adding a point according to the degree of contribution, thereby promoting spread thereof.

### BRIEF DESCRIPTION OF THE DRAWINGS

[Fig. 1] Fig. 1 is a diagram showing an outline of an electric vehicle charging system according to one embodiment of the present invention;
[Fig. 2] Fig. 2 is a diagram showing the relationship between Figs. 2A and 2B;
[Fig. 2A] Fig. 2A is a block diagram showing an outline of a system configuration according to the embodiment;
[Fig. 2B] Fig. 2B is a block diagram showing an outline of the system configuration according to the embodiment;
[Fig. 3] Fig. 3 is a block diagram showing an outline of the system configuration according to the embodiment;
[Fig. 4] Fig. 4 is a diagram showing the relationships among Figs. 4A, 4B and 4C;
[Fig. 4A] Fig. 4A is a flowchart showing processing by the electric vehicle charging system using charging facilities according to the embodiment;
[Fig. 4B] Fig. 4B is a flowchart showing the processing by the electric vehicle charging system using the charging facilities according to the embodiment;
[Fig. 4C] Fig. 4C is a flowchart showing the processing by the electric vehicle charging system using the charging facilities according to the embodiment;
[Fig. 5] Fig. 5 is a diagram showing the relationships among Figs. 5A, 5B and 5C;
[Fig. 5A] Fig. 5A is a flowchart showing processing by an electric vehicle charging system using an ordinary household power supply according to an embodiment;
[Fig. 5B] Fig. 5B is a flowchart showing the processing by the electric vehicle charging system using the ordinary household power supply according to the embodiment;
[Fig. 5C] Fig. 5C is a flowchart showing the processing by the electric vehicle charging system using the ordinary household power supply according to the embodiment;
[Fig. 6] Fig. 6 is a diagram showing an outline of an electric vehicle charging system using a mobile phone according to one embodiment of the present invention;
[Fig. 7] Fig. 7 is a diagram showing an outline of an electric vehicle charging system using optical communication according to one embodiment of the present invention;
[Fig. 8] Fig. 8 is a diagram showing an example of application and processing of an Eco-point according to the embodiment; and
[Fig. 9] Fig. 9 is a diagram showing an example of a method for calculating the Eco-point according to the embodiment.

### BEST MODE FOR CARRYING OUT THE INVENTION

Embodiments of the present invention will be described in detail below with reference to the drawings.

### (First embodiment)

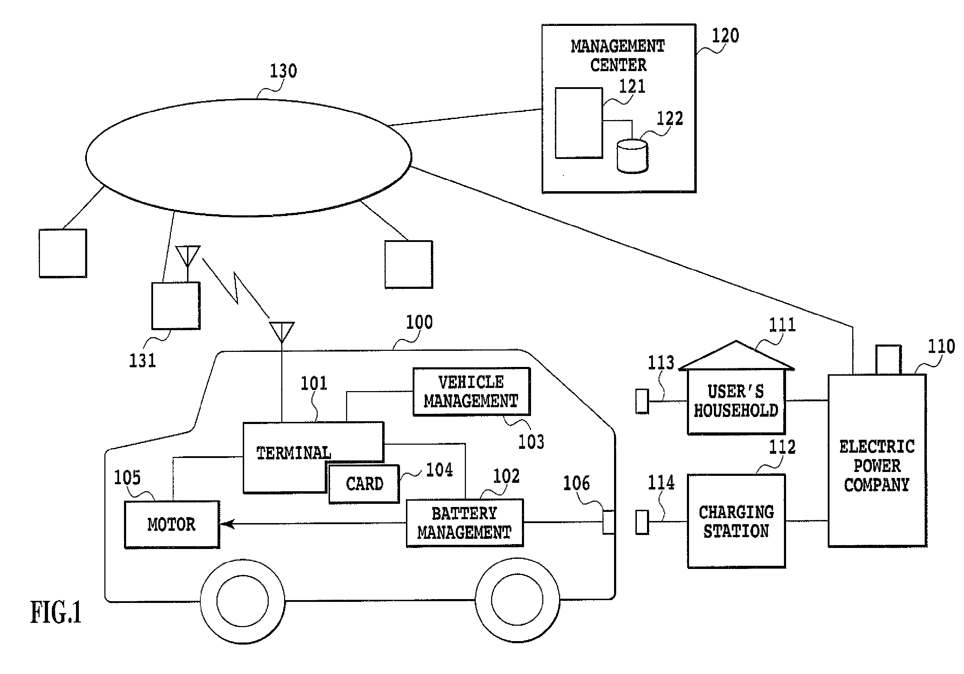

Fig. 1 is a diagram showing an outline of an electric vehicle charging system according to the present invention. As shown in Fig. 1, the electric vehicle charging system of the present invention is constituted of an electric vehicle 100, an electric power company 110, a management center 120, a network 130 that provides their connections, and the like. A battery of the electric vehicle 100 is charged with electric power provided mainly by the electric power company 110, and various kinds of charge-related information are transmitted to and received from the management center 120 or the like via the network 130 or the like. In this embodiment, the supply of the electric power is effected by the generation of the electric power mainly by a power plant of the electric power company; however, the present invention is not limited to this, and an electric power generation method or system known in the technical field may be used for the supply. Also, in this embodiment, the electric vehicle is described by way of example as an electrically-driven apparatus; however, the present invention is not limited to this, and any apparatus may be used, provided that it has a secondary battery mounted therein and is electrically driven.

As shown in Fig. 1, the electric vehicle 100 includes a management terminal 101 that collects various kinds of information and executes control in order to implement the present invention; a power supply unit 102 that uses a storage battery to supply the electric power to a motor 105 acting as driving means; a vehicle manager 103 that collects and manages mileage as the driving amount, and besides, various kinds of data on the vehicle forming a chassis; an owner information manager 104 that stores identification information (or ID) on the owner of the electric vehicle; and a charge connection unit 106 that serves as an interface via which the electric power for charging the storage battery of the power supply unit 102 acting as power supply means is supplied. Charging is carried out via the charge connection unit 106, and specifically, the supply of the electric power is effected by a connection to a household charger 113 that gives a charge through a typical outlet in an ordinary household 111, or by a connection to a quick charger 114 of charging facilities 112 such as a charging station.

At the time of charge, the electric vehicle 100 uses radio communication, for example, to transmit and receive various kinds of data to and from a server 121 provided in the management center 120, via a radio base station 131 and the network 130. Part of such data, or data used by the server 121 is stored in a database 122. Likewise, a server in the electric power company 110 is connected to the network 130 to thus permit data communication with the server of the management center 120 or the management terminal 101.

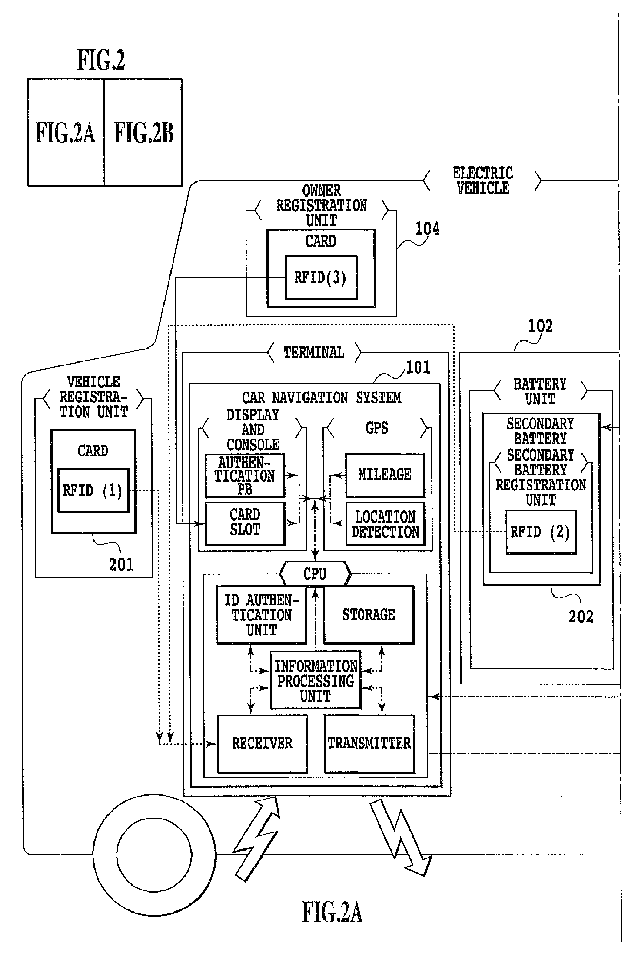

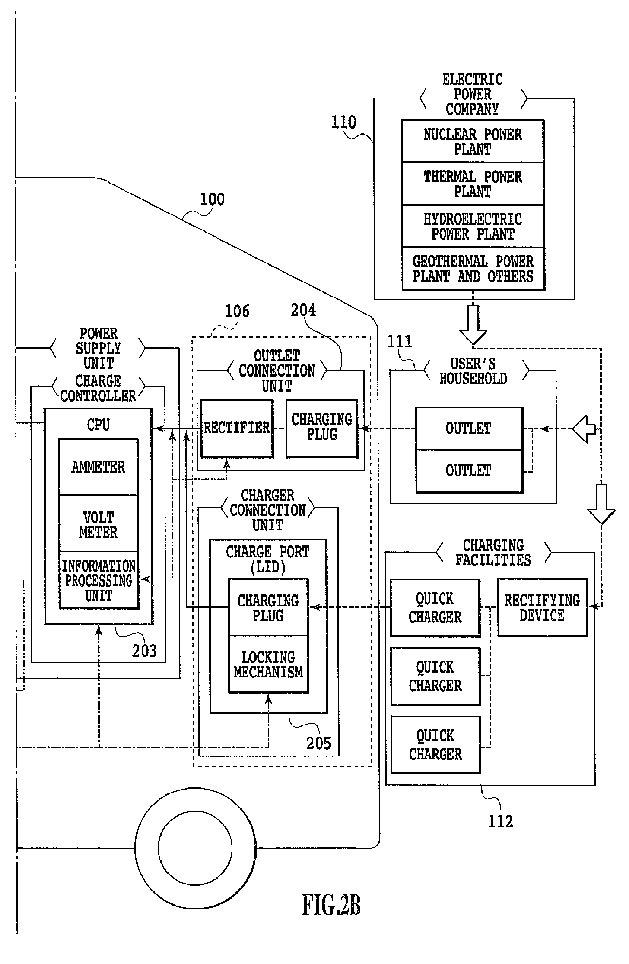

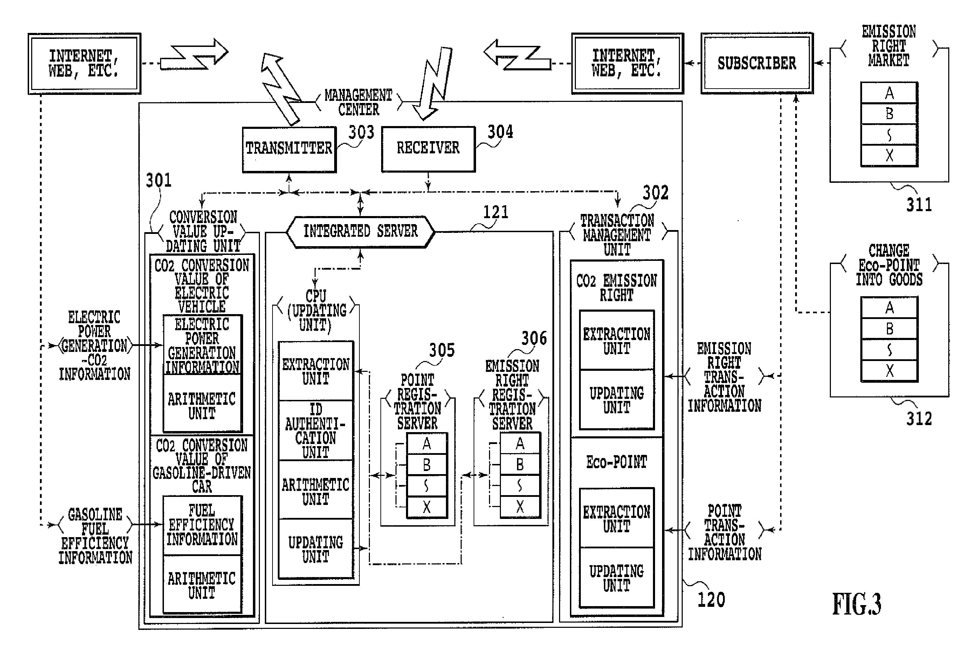

Although the overall configuration of the system of the present invention is as described above, the terminal and the server that form each individual system according to this embodiment need to have the function of a typical computer at least connectable to the network. Under such conditions of hardware, a software program is installed in such hardware to execute processing of each individual system according to this embodiment. Individual pieces of software can be depicted as modular architecture as shown for example in Figs. 2A and 2B and Fig. 3; however, it goes without saying that this is illustrative only, and the function of each module may be further subdivided into several modules, or the functions of several modules may be envisaged as an integrated module. The modular architecture of each individual system will be described below, and these modules are executed in cooperation with each other thereby to accomplish the processing according to this embodiment to be described later.

Figs. 2A and 2B are block diagrams mainly showing functional modules of the electric vehicle 100 for the execution of the processing according to this embodiment. As shown in Figs. 2A and 2B, the management terminal 101 performs various kinds of management involved in the electric vehicle 100 according to this embodiment, and executes the processing according to this embodiment to be described later, in conjunction with, for example, a GPS function including acquisition and management of the mileage, a function of authenticating that the battery and the vehicle belong to the owner by using the ID or the identification information, and the like. Also, the power supply unit 102 includes a battery 202 and a charge controller 203, and performs appropriate charge management at the time of charge or transmits the identification information for the battery unit 202 at the time of ID authentication.

In this embodiment, the vehicle manager 103 shown in Fig. 1 gets vehicle identification information from an IC tag 201 or the like, for example, attached to the vehicle that forms the chassis, and transmits the vehicle identification information to the management terminal 101; however, the vehicle identification information may be transmitted directly from the IC tag 201. The charge connection unit 106 has different charge ports inside so as to avoid improper supply and uses an outlet connection unit 204 for the ordinary household or a charge port 205 for the charging facilities, since the electric power supplied has different properties, such for example as a direct current and an alternating current, depending on whether the electric power is for use in the ordinary household or for use in the charging facilities.

Fig. 3 is a block diagram mainly showing functional modules for executing the processing according to this embodiment on the management center side. As shown in Fig. 3, the management center performs various kinds of management, while carrying out data communication with the electric vehicle 100, using a transmitter 303 and a receiver 304 of the server 121, and, in this embodiment, performs management of a user, the vehicle owned by the user, an Eco-point, or the like, in particular. At that time, a point registration server 305, an emission right registration server 306, or the like is used. Further, the management center includes a conversion value updating unit 301 that manages a reference for a conversion value of CO₂ emission as data for use as a reference for calculation, such as the reference amount of non-electrical exhaust gas emissions, and that transmits the reference to the management terminal 101; and a transaction management unit 302 that transacts Eco-points and emission trading markets.

### (The processing according to this embodiment)

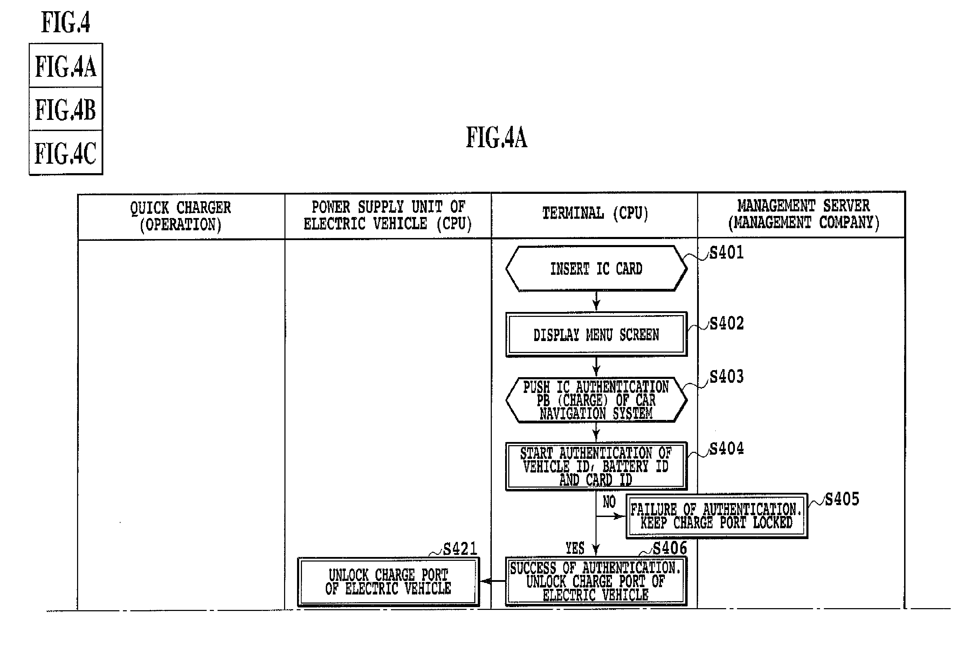

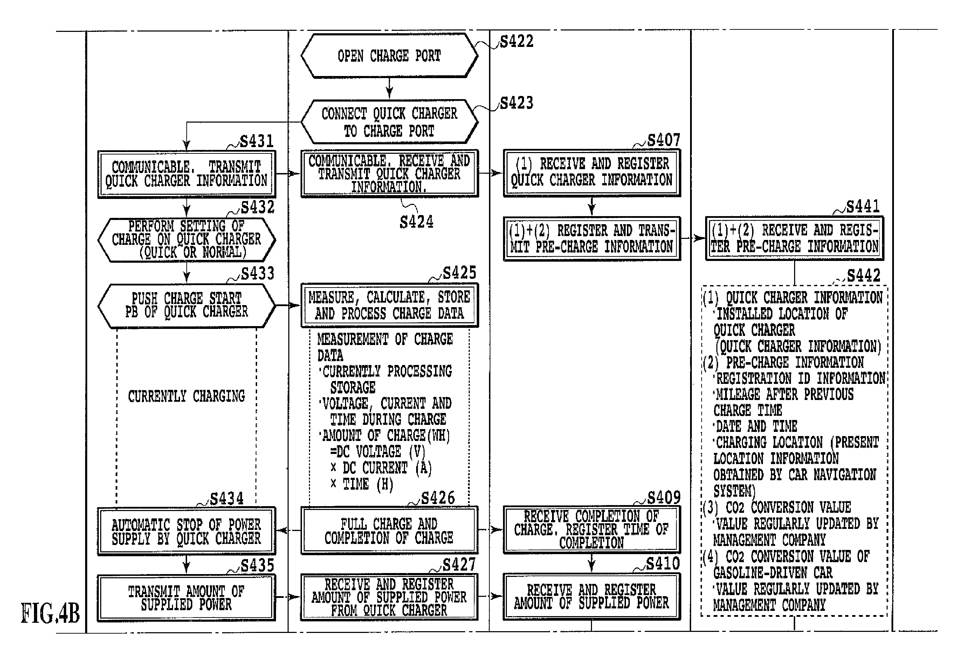

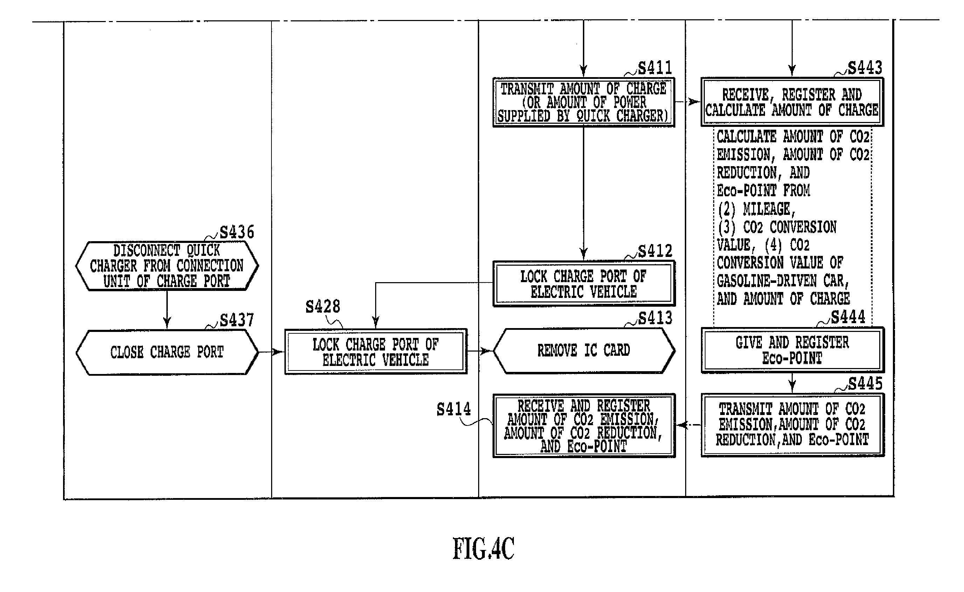

Figs. 4A, 4B and 4C are flowcharts showing the processing by the electric vehicle charging system using the charging facilities according to this embodiment. First, the owner of the electric vehicle 100 stops his or her automobile at a predetermined charge-capable location. The predetermined charge-capable location is capable of charging, provided that it has installation of the charging station having installation of the quick charger 112, and description will be given mainly with regard to an instance where the quick charger 112 of the charging station is used for charging.

Typically, the charging station has multiple quick chargers 112 installed therein, and the electric vehicle 100 is stopped at a predetermined location set in each individual quick charger 112. Whether a main key of the electric vehicle 100 should be ON or OFF at the time of charging is not specified here; desirably, the condition that the main key be in the OFF state, however, is set in order to ensure safety. The owner inserts an authentication card 104 for charge into an authentication card throttle of the electric vehicle 100 (S401). In this embodiment, the electric vehicle 100 is described as having mounted therein a car navigation system 210 connected to or built in the management terminal 101 having the authentication function; however, the present invention is not limited to this, and the description restricts in no way the scope of the invention, provided that the electric vehicle 100 has a CPU terminal mounted therein. Also, concerning a method for identifying the owner, what is required is only a function by which the carrying of the card 104 makes communication possible, instead of the insertion of the card 104 into the throttle, and a main body of the electric vehicle 100 or an ETC (electronic toll collection) system may have the authentication function.

In the step of starting charge, when the authentication card 104 for charge is inserted into the authentication card throttle of the electric vehicle 100 (S401), a menu selection screen appears on a liquid crystal screen of the car navigation system 210 (S402). The screen of the management terminal 101 in this embodiment, also serves as that of the car navigation system 210 and has a touch panel attached thereto, and for the start of charge, a charge start menu displayed on the menu selection screen is touched. The IC tag 201 of the body of the electric vehicle 100, the secondary battery 202 mounted in the electric vehicle, and the authentication card 104 each have information inherent in the owner, the electric vehicle and the secondary battery registered in advance. Before charge, authentication for charge permission is performed to authenticate that there is a match in the information on the electric vehicle 100, the secondary battery and the authentication card (S404).

The authentication is performed in advance thereby not only to confirm that the owner is a subscriber to an Eco (eco) point system, but also to obtain a crime prevention effect such as preventing a stolen electric vehicle from being charged in a situation where the electric vehicle, the secondary battery or the authentication card has been stolen or in other situations, obtaining information on when and where the stolen vehicle has been charged, as will be described later, and the like.

As the function of preventing charge at the time of authentication failure, in this embodiment, when the authentication fails (S405), a function of not allowing the unlocking of a lid of the connection unit (or the charge port) having a connection to a cord for charge is provided. Instead of the function, a breaker may be provided between the connection unit and the secondary battery to perform on-off control on the breaker, or authentication failure information may be communicated to the quick charger side to perform control on the quick charger side. When there is a match in individual authentication thereby to unlock the charge port (S406), the owner can open the charge port, and the connection of the charging cord from the quick charger 112 is made possible (S421 and S422). The quick charger 112 is provided with a connection plug for a connection to the electric vehicle 100, and the connection plug is connected to the electric vehicle (S423). Specifications of the connection plug such as the shape thereof and the electric power supplied from the quick charger are not described in detail here but may be standardized. Also, the electric power supplied to charge the secondary battery needs to be direct-current power, and it is desirable that the standardized connection unit in the technical field be used to supply the standardized direct-current power. This is because, in the case of the quick charger 112, an increase in the size of a rectifier that converts alternating-current power to direct-current power (conversion from alternating current to direct current), or the like, leads to a desire of an increase in the efficiency of the cost, structure, weight or the like of the electric vehicle 100, and thus, the provision of the rectifier on the electric vehicle side might be undesirable.

In the case of the electric vehicle having a lithium battery mounted therein as the secondary battery currently under development, multiple assembled batteries are employed, and a CPU communicable with the quick charger 112 is mounted in order to uniformly charge the batteries. The quick charger 112 has a function of receiving information from the secondary battery side and thereby controlling the electric power supplied. For the electric power supplied, the specification of the quick charger 112 features the rectifier provided on the charging station, and thereby direct-current power is supplied.

When the connection plug provided to the quick charger 112 is connected to the charge port 205, the CPU built in the management terminal 101 mounted in the electric vehicle communicates with the quick charger 112 and the quick charger 112 receives a "charging location" (S431 and 432). The "charging location" is managed for each quick charger 112 by the installed location of the charging station and a quick charger number thereby to permit more accurate management. Further, "mileage" and "present location" received from the car navigation system 210 are registered, "date," "time," "place," and "mileage (the mileage from the previous charge time to the this-time charge time)" are registered as pre-charge information, and the pre-charge information "date," "time," "place," and "mileage," in conjunction with "registered ID," are transmitted to the server 121 installed in the management center 120 (S408).

The transmitted information is received by the management server 121, and data is updated and registered in each individual registered file (S441). At this time, a unique management ID registered in the management center 120 is compared to the received registered ID thereby to check whether unauthorized manipulation or the like occurs. If an operation such as sending information to a contact registered in advance has been set, the crime prevention effect is further enhanced when a fraud is found. For the mileage from the previous charge time to the this-time charge time, the "mileage" based on a mileage signal from the car navigation system 210 is used; however, the more accurate "mileage" is obtained by the use of data from a mileage meter installed in the body of the electric vehicle 100, and such a configuration may be used. However, the present invention is not limited to this, and a configuration known in the technical field may be used.

Hereinafter, the management server 121 is assumed to perform processing to be described later, based on information received from the individual CPU mounted in the electric vehicle 100. In this embodiment, the quick charger 112 has specifications such that the owner can make various settings at his/her option such as quick charge, normal charge or charge time setting. However, the present invention is not limited to this, and this setting function varies according to the specifications of the quick charger 112. The connected quick charger 112 is provided with a charge start PB, and the charge start PB is turned on to start charging (S433).

Desirably, the charge start PB is such that charging is started only when the charge start PB is turned on, in order that a charging operator such as the owner can reliably check that pre-charge preparation is normally performed, in consideration for safety. For safety measures, various measures known in the technical field, not described in detail here, such as the provision of an automatic emergency stop function, an emergency stop PB, or the like, may be appropriately applied.

When charging is started, measurements of current, voltage and charge time are started in order to know the amount of charge (S426). In the case of charging by the quick charger 112, a wattmeter installed in the quick charger 112 is capable of measuring an accurate amount of power, and the amount of electric power consumed for charge can be known and registered with communication between the quick charger 112 and the CPU 203 mounted in the electric vehicle 100. Upon completion of charge (S426), the supply of the electric power from the quick charger 112 is stopped, and the amount of electric power measured by the quick charger 112 is received and registered by communication between the quick charger 112 and the CPU 203 mounted in the electric vehicle 100.

Upon completion of charge, the CPU 203 registers charge information such as the amount of charge, and the registered "amount of charge" is transmitted to the management server 121 of the management center 120 and is registered in the individual file of the management server 121 (S409 and S410). The owner closes the charge port 205 of the electric vehicle 100 thereby to make it possible to drive the electric vehicle (S436 and S437) . At this time, the closed charge port 205 is locked (S412 and S428), and this lock is not released unless a pre-charge authentication operation at the next charge time is performed.

In a series of operations described above, communication on the charge information is made between the CPU 101 mounted in the electric vehicle 100 and the management server 121 installed in the management center 120 (S411 and S443), and the Eco-point at the time of charge is given to the registered individual. The management server 121 installed in the management center 120 performs individual management, the registered information is transmitted to the CPU 101 mounted in the electric vehicle 100 every time updating occurs, and the owner can insert the authentication card 104 into the throttle of the car navigation system 210 thereby to display information such as the charge information, the amount of CO₂ emission, the amount of CO₂ reduction, the assignment of the Eco-point, and the consumption of the Eco-point, previously registered, on the screen of the car navigation system 210.

Description will be given below with regard to processing for the assignment of the Eco-point by the management server 121 installed in the management center 120. Information transmitted, at the time of charge of the electric vehicle 100, from the CPU 101 mounted in the electric vehicle 100 is received by the management server 121 installed in the management center 120 (S441). The information received at the time of charge of the electric vehicle 100 is pre-charge information and post-charge information, the pre-charge information contains "individual authentication ID (the body, the battery and the card)," "charging place," "mileage," "date," and "time." Processing for identifying a registered individual file to be updated at this time by the "individual authentication ID" information and invoking the file to a data update server is performed, and processing for updating the received data is performed. At this time, a check is made as to whether the individual authentication ID matches the registered authentication ID, and if there is a mismatch, an abnormality is detected.

If the abnormality is detected, the data is not updated, abnormality detection information is registered, a collation is made to stored data on the body, the battery and the card of the received "individual authentication ID," and the information is provided to a preregistered report agency for the owner of pertinent data. At this time, the present location of the body, the battery and the authentication card of the electric vehicle 100 to be charged can be identified, and a guard or the like may be dispatched to the location. In this embodiment, no further detailed description will be given with regard to measures for crime prevention. However, the measures may be incorporated into services in which crime prevention systems known in the technical field are constructed.

Upon completion of normal charging operation by the above processes, the server 121 receives the "amount of charge" transmitted as after-completion-of-charge information from the CPU mounted in the electric vehicle (S443). In this embodiment, the "amount of charge" is treated as the official "amount of charge," regardless of the amount of electric power consumed in charging by the quick charger 112. Here, in the case of charging from the quick charger 112, the information received as the pre-charge information contains information on the installed location of the quick charger used for charging.

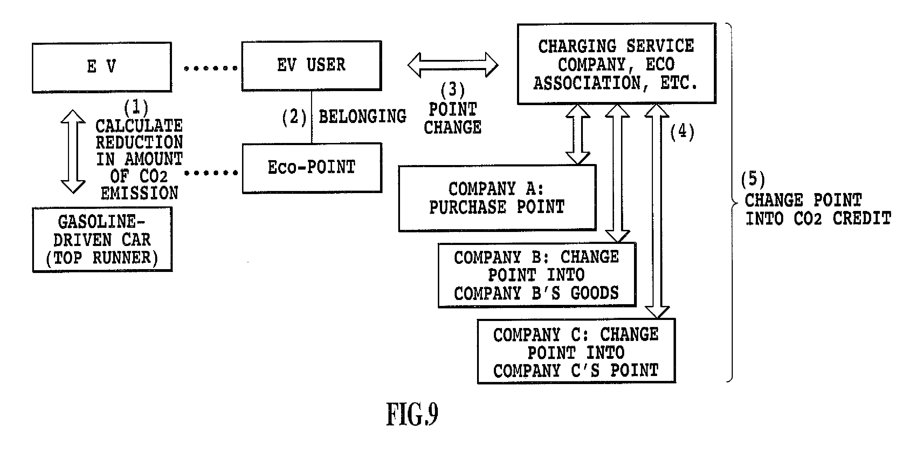

The management center 120 can use a calculation method as shown in Fig. 9 to obtain the Eco-point by the following processing, as the result of discussing the use of the Eco-point. For example, the conversion value updating unit 301 manages an "amount of electric power-to-CO₂ conversion value" to convert the amount of electric power consumed in charging into the amount of CO₂ emission, and a "gasoline-fueled automobile mileage-to-CO₂ conversion value" to convert the amount of CO₂ emission according to the mileage of a gasoline-fueled automobile, and updates and manages the "amount of electric power-to-CO₂ conversion value," based on information on the amount of CO₂ emission for the amount of generated electric power calculated from regularly-updated operating ratio of electric power generation facilities possessed by the electric power company or the like. Also, the conversion value updating unit 301 likewise updates and manages the "gasoline-fueled automobile mileage-to-CO₂ conversion value," based on information on the amount of CO₂ emission for the mileage of the gasoline-fueled automobile obtained from regularly-updated fuel efficiency information on the gasoline-fueled automobile.

An official conversion value may be used as the conversion value on the amount of CO₂ emission, and the use of a government-authorized conversion value enables achieving further fairness. In this embodiment, the conversion value is not described in detail here since it is concerned with a country's system. However, the conversion value may be updated by information capable of achieving further fairness. Also, the amount of CO₂ reduction can be more accurately known, if an appropriate "amount of electric power-to-CO₂ conversion value" according to the mode of charging can be applied, for example, the "amount of electric power-to-CO₂ conversion value" applied to charging by late-night electric power has been registered.

In this manner, from the above-mentioned "amount of charge" and "amount of electric power-to-CO₂ conversion value," the actual "amount of CO₂ emission" from the electric vehicle is obtained, and from the above-mentioned "mileage" and "gasoline-fueled automobile mileage-to-CO₂ conversion value," the "amount of CO₂ emission" from the gasoline-fueled automobile for the mileage from the previous charge time to the this-time charge time is obtained. Then, a subtraction is performed to obtain the "amount of CO₂ reduction of the electric vehicle for the mileage from the previous charge time to the this-time charge time."

The amount of CO₂ reduction is achieved by selecting the electric vehicle as the result of purchase and running of the electric vehicle because of awareness of environmental conservation at the time of purchase of an automobile, and a merit achieved as compared to the purchase and running of the gasoline-fueled automobile is represented as the amount of CO₂ reduction. The management center 120 calculates the Eco-point for the amount of CO₂ reduction and gives the Eco-point. The calculated result is updated and stored in the registered individual file (S445). Also, the updated data is transmitted to the CPU 101 mounted in the unique electric vehicle 100, and the CPU-registered data is updated (S414).

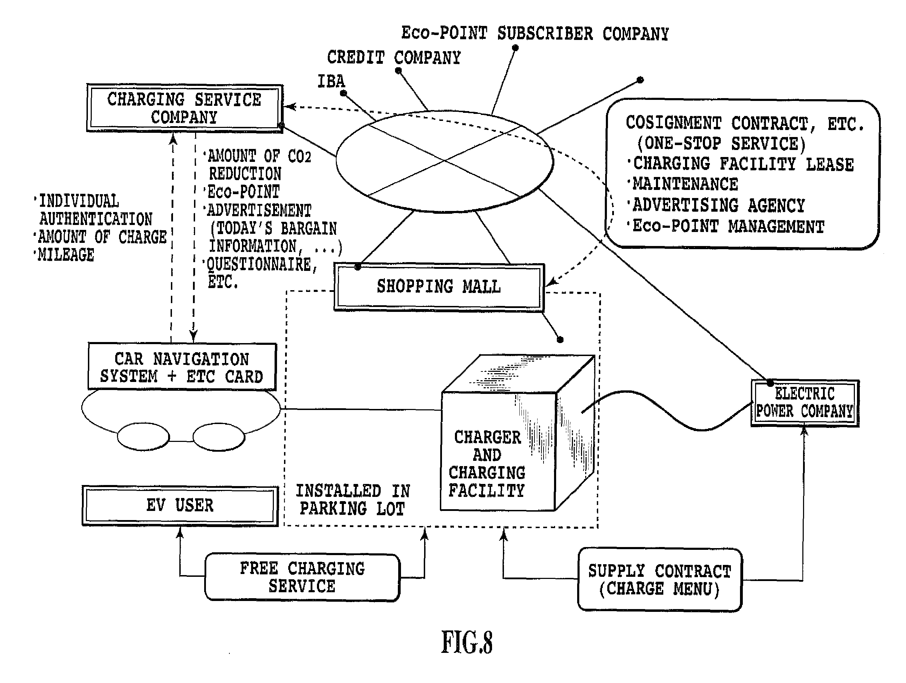

Description will now be given with reference to Fig. 8 with regard to application and processing of the given Eco-point by the management center 120. Obtained Eco-point can be changed into service according to the number of points within the range of the number of remaining points of the obtained Eco-points.

Also, in a domestic CO₂ emission right system, if the amount of CO₂ reduction by the electric vehicle is recognized as a CO₂ emission right, a CO₂ emission right market for the electric vehicle 100 can be established, and the application of Eco-point is made possible by a profit obtained by the buying and selling of the CO₂ emission right. From this, the effects, such as spread of the electric vehicle, knowing the amount of CO₂ emission from the electric vehicle, and knowing the amount of CO₂ reduction of the electric vehicle, are assumed, and the Eco-point can also be used as a system capable of contributing also to expansion of business that contributes to the CO₂ reduction in other fields. Additionally, if improvement of a system on the national level is completed, the national-level effect can be expected. As the application in the case where the domestic CO₂ emission right system is improved, the management center 120 is managed by a government-authorized organization and performs transactions involved in the collection of the CO₂ emission rights and the buying and selling thereof.

For the collection of the CO₂ emission right, the amount of CO₂ reduction by the electric vehicle is one of targets, and the amount of CO₂ reduction can be treated as the CO₂ emission right and be dealt in, provided that the business contributes to the CO₂ reduction in other fields and is authorized by the government. Moreover, an entry into a CO₂ market allows a contract for the buying and selling of the CO₂ emission right to be made with a company requiring the CO₂ emission right.

The management center 120 presets a selection method for multiple applications for purchase of the CO₂ emission right, and performs transactions of the CO₂ emission right in accordance with the method. The management center 120 returns a profit obtained by the CO₂ emission right transaction to a provider of the amount of CO₂ reduction. In the case of the electric vehicle, a target is an individual, and the scale of the CO₂ emission right is small, and thus, it can possibly be difficult for the owner of the electric vehicle 100 to directly deal in the CO₂ emission right. Accordingly, the management center collectively deals in the CO₂ emission rights on behalf of the owners of the electric vehicles, and provides the results in the form of Eco-point assignment and return service based on the points.

As described above, the use of the system and method for charging the electrically-driven apparatus according to this embodiment enables a contribution to the environment by the use of the electrically-driven apparatus to be quantified at a given level, and thus enables spread of such an apparatus to be promoted.

### (Second embodiment)

This embodiment is substantially identical in system with the above-mentioned first embodiment, but assumes a case where charging is performed from an outlet in an ordinary household, for example, after coming back home, instead of use of charging facilities in charging, such as a charging station. Therefore, processing according to this embodiment is not greatly different from that according to the first embodiment, but is different in control of a charger or a battery because the quick charger is not used.

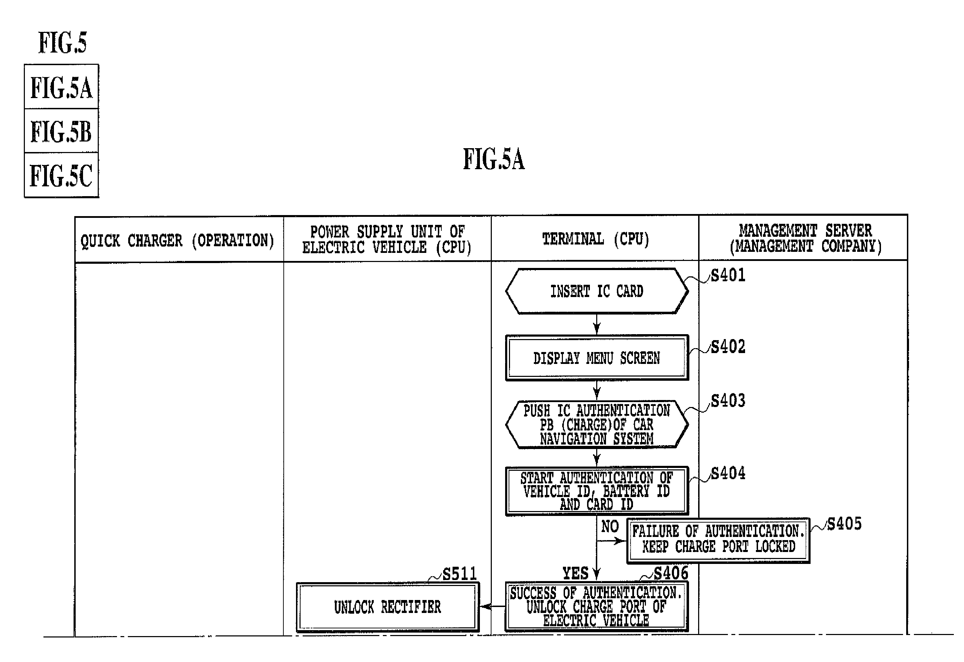

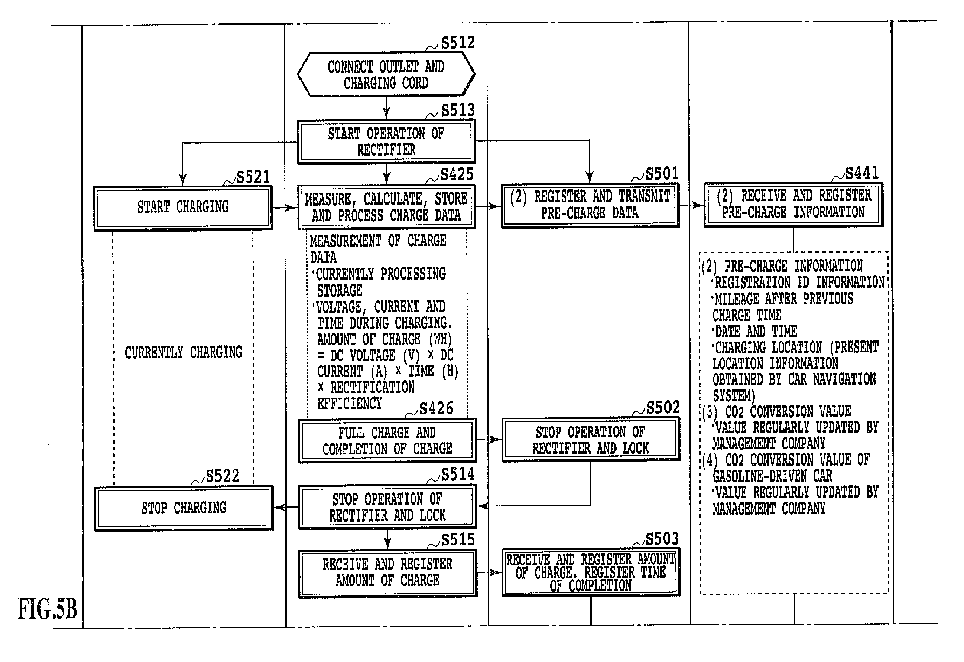

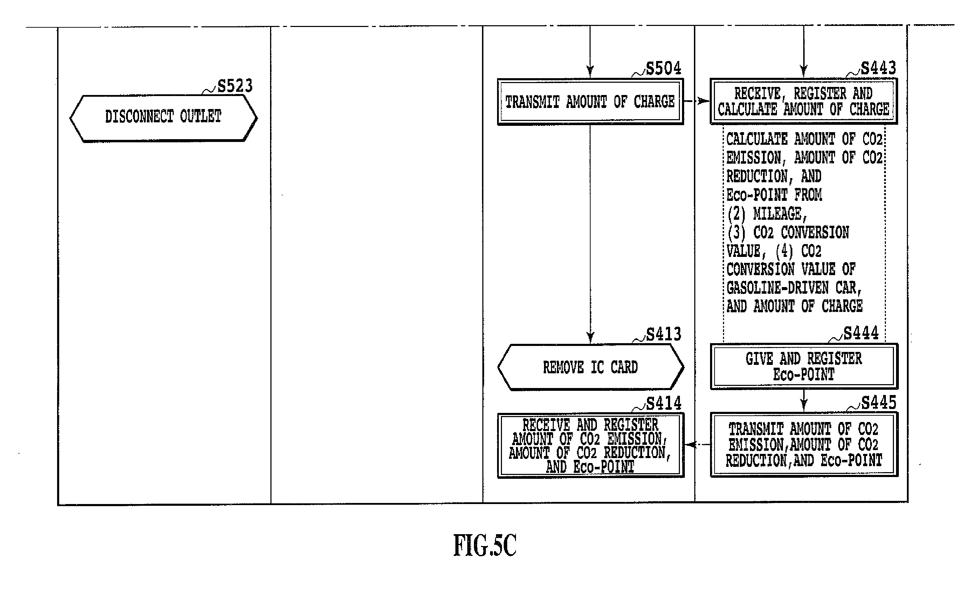

Figs. 5A, 5B and 5C are flowcharts showing the processing by an electric vehicle charging system using an ordinary household power supply according to this embodiment. Of the processing shown in Figs. 5A, 5B and 5C, parts that perform the same processing as the first embodiment are indicated by the same references. Description will be given below mainly with regard to parts that are different from the first embodiment.

Before the owner authentication or the like is performed and then charging is started, the same processing as in the first embodiment is performed. Thereafter, in this embodiment, a utility outlet 111 is used for charging, and thus, charging at the occurrence of failure of the authentication can be prevented by controlling the rectifier mounted in the car body (S511 to S513). If there is a match in individual authentication and the charge port is unlocked, the owner can open the charge port. Here, electric power supplied by the utility outlet for home use is an alternating current of 100 V or an alternating current of 200 V. It is actually inefficient that each household is provided with charging equipment, such as an outlet converted to direct current, exclusively for charging the electric vehicle. Although it is possible to adopt an approach adapted for charging from the household outlet, by attachment of a cord adapter exclusively for charging the electric vehicle, including a plug for a connection to the electric vehicle (i.e., a standardized connection plug provided in the quick charger), a rectifier that converts 100 V or 200 V alternating-current power into a direct current, and a plug 204 having a connection to the utility outlet 111 for home use, it is preferable that the electric vehicle be provided with a rectifier exclusively for charging, because the rectifier that converts an alternating current of 100 V or 200 V supplied by the household outlet into the direct current may be small in size, and in consideration of time and labor for preparation of the cord with the rectifier exclusively for charging.

Also, in this embodiment, the household utility outlet incapable of obtaining location information, unlike the quick charger of the first embodiment, is used for charging, and thus the location information at the time of charging is obtained with the GPS of the car navigation system. In a case of obtaining the location information with the GPS, the location information may not be obtained when charging is performed from the household utility outlet in a closed environment such as an underground parking lot. However, all various kinds of data involved in charging are stored in the CPU 101 mounted in the electric vehicle, and data may be transmitted by using, as a charging location, a point where GPS location information is first obtained, at the time when communication with the management server 121 becomes possible.

Typically, in a case where charging is performed from a common outlet in a residential complex such as an apartment, or in other cases, it is difficult to know when, by whom, and how much charging is performed. However, service that provides charge information is possible by utilizing the system and by making a contract with an apartment management company in advance, and thereby, the management center 120 of the apartment can charge the owner of the charged electric vehicle 100, based on the information.

If the location information is unclear as is the case with the underground parking lot or the like, a measure such as individual installation of a transmitter or the like capable of location information communication may be taken to prevent a fraud. As mentioned above, in this embodiment, electric power is supplied from the utility outlet in the ordinary household, the apartment or the like. In the case of charging from the utility outlet, use of late-night electric power is conceivable. In this embodiment, although no further detailed description will be given, charging may be performed by a method known in the technical field.

In the case of charging by the quick charger 112 of the first embodiment, an accurate amount of power can be measured by the wattmeter installed in the quick charger, and it is possible to know and register the amount of electric power consumed in charging by use of communication between the quick charger 112 and the CPU 101 mounted in the electric vehicle 100. By contrast, in the case of charging from the household utility outlet of this embodiment, it is actually inefficient that each household is provided with the wattmeter exclusively for charging the electric vehicle, as is the case with the above-mentioned rectifier, and thus an authorized wattmeter may be used as the wattmeter capable of accurate measurement of the amount of power. However, in this case, the wattmeter is large in size, is heavy in weight, is high in price, and further needs to be authorized regularly. In this case, the authorized wattmeter may be attached to the cord adapter for charge, but this is also undesirable in terms of the cost, structure, weight or the like of the electric vehicle 100.

This embodiment has a configuration in which the function of measuring the amount of charge, possessed by the CPU for charge control mounted in the secondary battery, is utilized and the CPU mounted in the electric vehicle processes the obtained information. The amount of charge obtained here is the amount of electric power after conversion into direct-current power by the rectifier, and this is not the electric power supplied from the actual utility outlet with the conversion efficiency of the rectifier. Thus, power consumption can be known by calculating the conversion efficiency at the time of manufacture, which has been registered in the CPU mounted in the electric vehicle. Although the conversion efficiency of the rectifier does not vary greatly, regular calibrations are required in order to obtain a more accurate value

Upon completion of charging, the outlet is disconnected and charging is brought to an end, and the transmission and receipt of various kinds of data, the calculation of numeric values, and the like, which are performed subsequently, can be carried out in the same manner as in the first embodiment.

As described above, this embodiment enables implementation of the present invention by using the utility outlet in the ordinary household, besides the exclusive charging facilities.

### (Third embodiment)

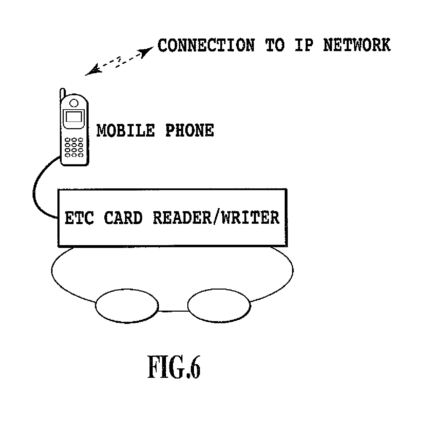

Although the above-mentioned first and second embodiments implement various functions by using the car navigation system 210, this embodiment is different from these embodiments in that a mobile phone having a data communication function and a GPS function is used as shown in Fig. 6. This embodiment is basically the same as the above-mentioned embodiments in other respects. In other words, in a case of calculating the mileage or the like, or communicating with the management center 120, the management terminal 101 performs the processing by use of the mobile phone. Thereby, even the owner who does not have the car navigation system can use the electric vehicle charging system of the present invention.

### (Fourth embodiment)

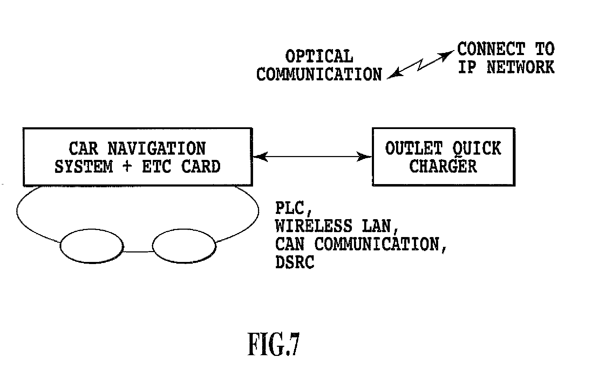

In the fourth embodiment, communication with the management center 120 is performed via a communication function provided in the quick charger 112, as distinct from the above-mentioned first, second and third embodiments. This embodiment is basically the same as the above-mentioned embodiments in other respects. In other words, as shown in Fig. 7, the management terminal 101 implements transmission of calculated values or download of various counts by optical communication, for example, provided in the quick charger. Thereby, the electric vehicle charging system of the present invention can be used even if some radio communication function is not provided to the vehicle.

## Claims

1. An electrically-driven apparatus charging system for charging a driven apparatus driven by electric power supplied by power supply means, comprising:
charging amount detection means for detecting the charging amount to the power supply means, when the power supply means is charged;
driving amount calculation means for calculating a driving amount of the electrically-driven apparatus after the last charging, the driving amount calculation means being provided in a chassis of the electrically-driven apparatus; and
a management terminal that acquires an amount of exhaust emission reduction, by calculating a reference amount of non-electrical exhaust emissions based on a preset amount of exhaust emissions from a non-electrically driven apparatus per unit driving amount and the driving amount calculated by the driving amount calculation means, and by calculating an actual amount of exhaust emissions required to generate electric power to be used for the charging based on a preset amount of exhaust emissions to be emitted to generate a per-unit amount of electric power for the charging and the charging amount detected by the charging amount detection means.

2. The electrically-driven apparatus charging system according to claim 1, further comprising:
power supply information transmission means for transmitting power supply means identification information for identifying the power supply means, the power supply information transmission means being connected to the power supply means; and
chassis information transmission means for transmitting chassis identification information for identifying the chassis, the chassis information transmission means being provided in the chassis of the electrically-driven apparatus, wherein
the management terminal includes charge management means for receiving the transmitted power supply means identification information and the transmitted chassis identification information, and inputted user identification information, for comparing the received identification information with prestored identification information, and for permitting charging the power supply means if there is a match.

3. The electrically-driven apparatus charging system according to any one of claims 1 and 2, wherein the management terminal further includes reference information acquisition means for downloading, from a management center server, the preset amount of exhaust emissions from the non-electrically driven apparatus per unit driving amount and the preset amount of exhaust emissions to be emitted to generate the per-unit amount of electric power for the charging.

4. The electrically-driven apparatus charging system according to claim 3, wherein the reference information acquisition means receives, from the management center server via a wireless network, the preset amount of exhaust emissions from the non-electrically driven apparatus per unit driving amount and the preset amount of exhaust emissions to be emitted to generate the per-unit amount of electric power for the charging.

5. The electrically-driven apparatus charging system according to any one of claims 1 to 4, wherein the management terminal includes Eco-point calculation means for calculating an Eco-point from the amount of acquired exhaust emission reduction.

6. The electrically-driven apparatus charging system according to claim 5, wherein the management terminal downloads an Eco-point coefficient for calculation of the Eco-point from the management center server.

7. The electrically-driven apparatus charging system according to claim 6, wherein the management terminal receives the Eco-point coefficient for calculation of the Eco-point from the management center server via the wireless network.

8. The electrically-driven apparatus charging system according to any one of claims 5 to 7, wherein the management terminal further comprises Eco-point transmission means for transmitting the calculated Eco-point to the management center server, and the management center server includes Eco-point management means for storing the transmitted Eco-point and managing the use and accumulation of the Eco-point.

9. An electrically-driven apparatus charging method for charging an electrically-driven apparatus driven by electric power supplied by power supply means, comprising:
a charging amount detecting step of detecting the charging amount to the power supply means when the power supply means is charged;
a driving amount calculating step of calculating the driving amount of the electrically-driven apparatus after the last charging by the driving amount calculation means being provided in a chassis of the electrically-driven apparatus; and
an amount-of-reduction calculating step of acquiring an amount of exhaust emission reduction, by calculating a reference amount of non-electrical exhaust emissions based on a preset amount of exhaust emissions from a non-electrically driven apparatus per unit driving amount and the driving amount calculated by the driving amount calculating step, and by calculating an actual amount of exhaust emissions required to generate electric power to be used for the charging based on a preset amount of exhaust emissions to be emitted to generate a per-unit amount of electric power for the charging and the charging amount detected by the charging amount detecting step.
